# EUROPEAN PATENT SPECIFICATION

(11) **EP 2 527 162 B1**
(45) Date of publication and mention of the grant of the patent: **03.09.2014**
(21) Application number: 12168866.7
(22) Date of filing: 22.05.2012
(51) Int. Cl.: B60C 9/04

(54) **Carcass ply structure for a pneumatic tire**
Karkassenschichtstruktur für einen pneumatischen Reifen
Structure de pli de carcasse pour pneu

(30) Priority: 25.05.2011 US 201113115157
(43) Date of publication of application: 28.11.2012
(73) Proprietor: The Goodyear Tire & Rubber Company, Akron, OH 44316-0001 (US)
(72) Inventor: Wright, Thomas Allen, Uniontown, OH Ohio 44685 (US)
(74) Representative: Kutsch, Bernd

(56) References cited:
- EP-A1- 0 640 498
- EP-A1- 2 123 481
- US-A1- 2006 180 261

## Description

### Field of the Invention

The present invention relates to a pneumatic tire having a carcass reinforced with a dual carcass structure.

### Background of the Invention

A conventional pneumatic tire comprises a carcass ply having a main portion that extends between both bead cores of the tire and turnup portions that are anchored around each bead core. The conventional tire has radially outer edges of the turnup portions of the carcass ply disposed radially outwardly of the bead cores a minimal distance and are in contact with the main portion of the carcass ply. Suitable elastomeric materials surround the bead core, carcass ply, and other elastomeric components to complete the bead portion of the tire. A clamping member comprise a strip of side-by-side cords of a heat shrinkable material embedded in a suitable elastomeric substance having a permanent thermal shrinkage of at least 2 percent. This strip of cords extends from a location radially and axially inward of the bead core to a location radially outward of the bead core and there is no filler strip or apex disposed between the main portion and turnup portion of the carcass ply. The heat shrinkable material may be 1260/2 Nylon 6,6, having a permanent thermal shrinkage of about 4 percent. It is a continual goal in the tire art to simplify the construction and reduce the expense of building tires, yet improve the durability, handling, rolling resistance, and other properties of tires.

Another conventional pneumatic tire may have two carcass plies or a single carcass ply reinforced with metallic cords, respectively. Either conventional tire may have a high ending ply turnup and locked bead construction.

Still another pneumatic tire may have a single carcass ply reinforced with parallel metallic cords, each cord composed of at least one filament having a tensile strength of at least (-2000 x D+4400 MPa) x 95%, where D is a filament diameter in millimeters. The turnup portion of the single carcass ply in the bead portion of the conventional pneumatic tire may be interposed between the bead core and a toe guard, with the radially outer edge of each turnup portion being in contact with the main portion of the carcass ply and extending to an end point 0.5 to 4.0 inches (12.7 to 101.6 mm) radially outward of the bead core. The toe guard may have a first end and a second end, each end disposed directly adjacent to the carcass ply.

The first end of the toe guard may be located on the axially inner side of the main portion of the carcass ply at a location 0.4 to 3.5 inches (10 to 89 mm) radially outward of the bead core and the second end may be located at a point ranging from substantially the axially outermost point of the bead core to a location 3.5 inches (89 mm) radially outward of the bead core. The first end and second end of the toe guard may be a shorter distance from the bead core than the end point of the turnup portion of the carcass ply.

The toe guard may be a rubber material, a flexible textile material, or a heat shrinkable material. For example, the toeguard may comprise a strip of side-by-side cords of a non-metallic heat shrinkable material which has a permanent thermal shrinkage of at least 2 percent wrapped circumferentially about the bead core and carcass ply turnup a plurality of times. When the toeguard is a rubber material, it may be canlendered gum strips circumferentially wound around the bead core and carcass ply turnups a plurality of times.

The use of separate stiffeners or apexes and chafer strips were shown to be used in combination with the plurality of windings of the gum strip used in the toeguard to form the bead portion of the tire. The uses of multiple windings of strip of material wound around the green or uncured tire to form a carcass in cylindrical form may lead to variations in the rubber thicknesses and gauges around the circumference of the tire as it is shaped toroidally and placed in a mold to cure under temperature and pressure.

EP-A- 2 123 481 describes a tire in accordance with the preamble of claim 1.

### Summary of the Invention

The invention relates to a tire in accordance with claim 1.

Dependent claims refer to preferred embodiments of the invention.

A pneumatic tire in accordance with a preferred embodiment of the present invention includes a pair of axially spaced apart annular bead cores, a first carcass ply, and a second carcass ply. The first carcass ply is wrapped around each bead core and has a first pair of carcass ply turnups substantially contiguous with the first carcass ply from the bead core to radially outer ends of the first pair of carcass ply turnups. The first carcass ply has a first polyester cord with a construction of 1400-1600 denier/2 with 8-10/8-10 turns per 2.54 cm (tpi). The second carcass ply is radially adjacent to and radially outward of the first carcass ply. The second carcass ply is wrapped around each bead core and has a second pair of carcass ply turnups substantially contiguous with the second carcass ply from the bead core to radially outer ends of the second pair of carcass ply turnups. The second carcass ply has a second polyester cord with a construction of 900-1100 denier/2 with 11-13/11-13 tpi.

According to another preferred aspect of the present invention, the first carcass ply comprises 14-20 ends per 2.54 cm (epi) of the first polyester cord.

According to still another preferred aspect of the present invention, the second carcass ply comprises 14-20 epi of the second polyester cord.

According to yet another aspect of the present invention, the pneumatic tire may further include a toeguard associated with each bead core.

According to still another aspect of the present invention, the pneumatic tire may further include an apex portion adjacent each carcass ply turnup along an axially outer side of each carcass ply turnup.

According to yet another aspect of the present invention, the bead cores may have a radial cross-sectional shape which is selected from the group consisting of a pentagon, a hexagon, a rectangle, and a circle.

### Definitions

The following definitions are controlling for the disclosed invention.

"Apex" means an elastomeric filler located radially above the bead core and between the plies and the turnup ply.

"Axial" and "axially" are used herein to refer to lines or directions that are parallel to the axis of rotation of the tire.

"Denier" means the weight in grams per 9000 meters (unit for expressing linear density). Dtex means the weight in grams per 10,000 meters.

"Density" means weight per unit length.

"Lateral" means an axial direction.

"Ply" means a cord-reinforced layer of rubber-coated radially deployed or otherwise parallel cords.

"Radial" and "radially" are used to mean directions radially toward or away from the axis of rotation of the tire.

"Toe guard" refers to the circumferentially deployed elastomeric rim-contacting portion of the tire axially inward of each bead.

"Turnup end" means the portion of a carcass ply that turns upward (i.e., radially outward) from the beads about which the ply is wrapped.

### Brief Description of the Drawings

The invention will be described by way of example and with reference to the accompanying drawings in which:
FIG. 1 is one half of a schematic cross-sectional view of an example tire in accordance with the present invention.
FIG. 2 is a schematic cross-sectional view of an example cord construction in accordance with the present invention.

### Detailed Description of an Example of the Present Invention

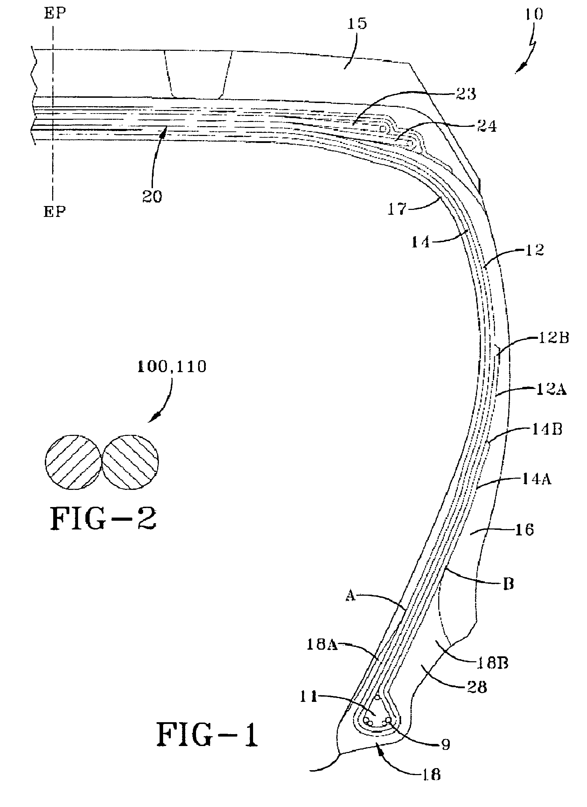

FIG. 1 shows a cross-sectional view of an example tire 10 in accordance with the present invention. The example tire 10 may have a pair of bead cores 11, each comprising a plurality of metallic filaments. The example tire 10 may be characterized by a first carcass ply 14 and a second carcass ply 12 that extend between the bead cores 11 and turnup portions 12a, 14a anchored around each bead core 11. A belt structure 20 may have at least two belts 23, 24 disposed radially outward of the main portion of the carcass plies 12, 14 and a ground engaging tread portion 15 may be disposed radially outward of the belt structure 20. Sidewall portions 16 may extend radially inward from the tread portion 15 to the bead cores 11. On the axially inner side of the carcass ply 14, an innerliner 17 may be used. The innerliner 17 may consist of a layer or layers of elastomer or other material that form an inside surface of the tire 10 for containing inflation fluid, such as air, within the tire. Additional barriers, reinforcement strips, and/or gum strips (not shown) may be disposed at suitable locations between the innerliner 17 and the main portion of the carcass ply 14 to avoid penetration of rubber through the carcass ply 14 during curing.

The belt structure 20 preferably comprises a plurality of belt plies 23, 24 located radially outward of the carcass plies 12, 14 in a crown portion of the tire 10. The elastomeric tread portion 15 may be disposed radially outward of the belt structure 20. The belt structure 20 may have at least two annular layers or plies 23, 24 of parallel cords, woven or unwoven, underlying the tread portion 15, unanchored to the bead cores 11. The belt structure 20 preferably has both left and right cord angles in the range from 40 to 15 degrees with respect to an equatorial plane EP of the tire 10. The belt structure 20 illustrated in FIG. 1 and described herein is shown as an example. For example, in those instances where a larger tire is being constructed for use in a radial light truck application, three or more belts may be used. In addition, cords in the belt plies 23, 24 may be rayon, polyester, glass fiber, aramid, steel wire, and/or the like. The cords may be steel wire filaments having a tensile strength of at least (-1400 x D + 4050) x 95% when D is the filament diameter in millimeters. Further, the cords may be composed of at least one filament having a tensile strength of at least (-2000 x D + 4050) x 95% when D is as defined above.

The bead cores 11 preferably each comprise a plurality of wraps of a single metallic filament 9. Each of the bead cores 11 have a circumferential cross-sectional shape, which may be substantially triangular, pentagonal, hexagonal, rectangular, or circular. The metallic filament 9 used in the bead cores 11 may be, for example, a 0.05 inch (1.27 mm) diameter steel wire coated with bronze to enhance its bonding with rubber. Other filament diameters may also be used.

The cords of the carcass plies 12, 14 preferably intersect the equatorial plane (EP) of the tire 10 at an angle in the range from 75 to 105 degrees. Further, the cords may intersect at an angle of 82 to 98 degrees or 89 to 91 degrees.

Preferably, the carcass plies 12, 14 and a toe guard 18 are folded about each bead core 11. Preferably, the radially outer edge of each turnup portion 12a, 14a is in contact with the main portion of the carcass plies 12, 14 and preferably extends to an end point 12B, 14B 0.5 inches (12.7 mm) to 4.0 inches (101.6 mm) radially outward of each bead core 11 from the middle of each bead core. Preferably, the turnup portions 12A, 14A may extend to an end point 12B, 14B 0.5 inches (12.7 mm) to 3.5 inches (88.9 mm) radially outward of each bead core 11. End point 12B may be radially inward (not shown) or radially outward (FIG. 1) of end point 14B. Locking in of the bead cores 11 may be achieved by adhesion between the turnup portions 12a, 14a and the main portion of the carcass plies 12, 14.

Each toe guard 18 has a first-end 18A and a second end 18B. Preferably, each end 18A, 18B is disposed directly adjacent to the carcass ply 14. Preferably, the first end 18A is located on the axially inner side of the main portion of the carcass ply 14 at a location 0.4 inches (10 mm) to 3.5 inches (89 mm) radially outward of the bead core 11 from substantially the middle of the bead core. Further, the first end 18A may be located on the axially inner side of the main portion of the carcass ply 14 at a location A 0.4 inches (10.16 mm) to 2.0 inches (50.8 mm) radially outward of the bead core 11. Preferably, the second end 18B of the toe guard 18 is located at a point B ranging from the axially outermost point of the bead core 11 to a location 3.5 inches (89 mm) radially outward of the bead core from the middle of the bead core. Further, the second end 18B of the toe guard 18 may be located at a point B ranging from the axially outermost point of the bead core 11 to a location B 2.0 inches (50.8 mm) radially outward of the bead core 11.

In one embodiment, the carcass ply turnups 12a, 14a may be folded about the bead core 11 and locked against the main portion of the carcass ply 12 by the sidewall 16. The wrap-around toeguard 18 may be made of a single elastomeric material or composition 28.

As described above, conventional passenger/SUV tires may have a casing/carcass construction that uses two layers of "ply treatment" (e.g., fabric cords embedded in a rubber matrix). Conventional tires typically use the same denier (cord weight) of a specific type of polyester cord for both layers. For example, a conventional tire may use polyester cord with a denier of 1500 in both ply layers.

In accordance with the present invention, one example ply 12 or 14 use higher denier polyester cords 100 (e.g., 1500, 2000) and the other example ply 14 or 12 may use lower denier polyester cords 110 (e.g., 1000, 1500). The benefits of such a two ply construction may include a reduction in tire weight, a reduction in tire/material cost, a reduction in rolling resistance force, improved tuning of noise-vibration-handling (NVH) performance characteristics, and lower heat generation in the casing structure leading to improved durability and high-speed performance characteristics.

In general (FIG. 2), either ply 12, 14 may have a cord 100, 110 with a construction of 900-2500 denier/2 polyester with 7-15/7-15 turns per inch (tpi) and 14-35 or 20-35 end per 2.54 cm (epi). Specifically, the radially outer carcass ply 12 may have a cord 100 with a construction of 900-1100 denier/2 polyester with 11-13/11-13 tpi and 14-20 epi; and the radially inner carcass ply 14 may have a cord 110 with a construction of 1400-1600 denier/2 polyester with 8-10/8-10 tpi and 14-20 epi.

As stated above, a carcass ply structure 12, 14 in accordance with the present invention produces excellent cost, weight, and performance characteristics in a pneumatic tire 10. This structure 12, 14 thus enhances the performance of the tire pneumatic 10, even though the complexities of the structure and behavior of the pneumatic tire are such that no complete and satisfactory theory has been propounded.

## Claims

1. A pneumatic tire comprising a pair of axially spaced apart annular bead cores (11); a first carcass ply (14) wrapped around each bead core (11) and having a first pair of carcass ply turnup portions (14A) substantially contiguous with the first carcass ply (14) from the bead core (11) to radially outer ends (14B) of the first pair of carcass ply turnup portion (14A), the first carcass ply (14) comprising a first non-metallic cord (110) with a construction of 1300-2500 denier/2 with 7-15/7-15 turns per 2.54 cm (tpi); and a second carcass ply (12) radially adjacent to the first carcass ply (14), the second carcass (12) ply being wrapped around each bead core (11) and having a second pair of carcass ply turnup portions (12A) substantially contiguous with the second carcass ply (12) from the bead core (11) to radially outer ends (12B) of the second pair of carcass ply turnup portions, **characterized in that** the second carcass ply (12) comprises a second non-metallic cord (100) with a construction of 900-1200 denier/2 with 9-15/9-15 turns per 2.54 cm (tpi).

2. The tire of claim 1 wherein the first non-metallic cord (110) has a construction of 1400-1600 denier/2 with 8-10/8-10 turns per 2.54 cm (tpi).

3. The tire of claim 1 or 2 wherein the second non-metallic cord (100) has a construction of 900-1100 denier/2 with 11-13/11-13 turns per 2.54 cm (tpi).

4. The tire of claim 1, 2 or 3 wherein the second carcass ply (12) is radially outward of the first carcass ply (14).

5. The tire of claim 1, 2 or 3 wherein the second carcass ply (12) is radially inward of the first carcass ply (14).

6. The tire of at least one of the previous claims wherein the first non-metallic cord is a polyester cord.

7. The tire of at least one of the previous claims wherein the second non-metallic cord is a polyester cord.

8. The pneumatic tire of at least one of the previous claims wherein the first carcass ply (14) comprises 14 to 35 ends per 2.54 cm (epi) of the first cord (110).

9. The pneumatic tire of at least one of the previous claims wherein the second carcass ply (12) comprises 14 to 35 ends per 2.54 cm (epi) of the second cord (110).

10. The pneumatic tire of at least one of the previous claims wherein the first carcass ply (14) comprises 14 to 20 ends per 2.54 cm (epi) of the first cord (110).

11. The pneumatic tire of at least one of the previous claims wherein the second carcass ply (12) comprises 14 to 20 ends per 2.54 cm (epi) of the second cord (110).

12. The pneumatic tire of at least one of the previous claims further comprising a wrap-around toeguard (18) associated with each bead core (11).

13. The pneumatic tire of at least one of the previous claims further comprising an apex portion.

14. The pneumatic tire of at least one of the previous claims wherein the bead cores (11) have a radial cross-sectional shape which is selected from the group consisting of a pentagon, a hexagon, a rectangle, and a circle.

## Patentansprüche

1. Luftreifen, umfassend ein Paar axial voneinander beabstandeter ringförmiger Wulstkerne (11); eine erste Karkassenlage (14), die um jeden Wulstkern (11) herumgeschlagen ist und ein erstes Paar Karkassenlagen-Umschlagteile (14A) im Wesentlichen angrenzend an die erste Karkassenlage (14), von dem Wulstkern (11) zu radial äußeren Enden (14B) des ersten Paars Karkassenlagen-Umschlagteilen (14A), aufweist, wobei die erste Karkassenlage (14) einen ersten nichtmetallischen Kord (110) mit einem Aufbau von 1300-2500 Denier/2 mit 7-15/7-15 Verdrillungen je 2,54 cm (TPI) umfasst; und eine zweite Karkassenlage (12) radial benachbart zu der ersten Karkassenlage (14), wobei die zweite Karkassenlage (12) um jeden Wulstkern (11) herumgeschlagen ist und ein zweites Paar Karkassenlagen-Umschlagteile (12A) im Wesentlichen angrenzend an die zweite Karkassenlage (12), von dem Wulstkern (11) zu radial äußeren Enden (12B) des zweiten Paars Karkassenlagen-Umschlagteilen, aufweist, **dadurch gekennzeichnet, dass** die zweite Karkassenlage (12) einen zweiten nichtmetallischen Kord (100) mit einem Aufbau von 900-1200 Denier/2 mit 9-15/9-15 Verdrillungen je 2,54 cm (TPI) umfasst.

2. Reifen nach Anspruch 1, wobei der erste nichtmetallische Kord (110) einen Aufbau von 1400-1600 Denier/2 mit 8-10/8-10 Verdrillungen je 2,54 cm (TPI) aufweist.

3. Reifen nach Anspruch 1 oder 2, wobei der zweite nichtmetallische Kord (100) einen Aufbau von 900-1100 Denier/2 mit 11-13/11-13 Verdrillungen je 2,54 cm (TPI) aufweist.

4. Reifen nach Anspruch 1, 2 oder 3, wobei die zweite Karkassenlage (12) sich radial auswärts von der ersten Karkassenlage (14) befindet.

5. Reifen nach Anspruch 1, 2 oder 3, wobei die zweite Karkassenlage (12) sich radial einwärts von der ersten Karkassenlage (14) befindet.

6. Reifen nach mindestens einem der vorgenannten Ansprüche, wobei der erste nichtmetallische Kord ein Polyesterkord ist.

7. Reifen nach mindestens einem der vorgenannten Ansprüche, wobei der zweite nichtmetallische Kord ein Polyesterkord ist.

8. Luftreifen nach mindestens einem der vorgenannten Ansprüche, wobei die erste Karkassenlage (14) 14 bis 35 Enden je 2,54 cm (EPI) des ersten Kords (110) umfasst.

9. Luftreifen nach mindestens einem der vorgenannten Ansprüche, wobei die zweite Karkassenlage (12) 14 bis 35 Enden je 2,54 cm (EPI) des zweiten Kords (110) umfasst.

10. Luftreifen nach mindestens einem der vorgenannten Ansprüche, wobei die erste Karkassenlage (14) 14 bis 20 Enden je 2,54 cm (EPI) des ersten Kords (110) umfasst.

11. Luftreifen nach mindestens einem der vorgenannten Ansprüche, wobei die zweite Karkassenlage (12) 14 bis 20 Enden je 2,54 cm (EPI) des zweiten Kords (110) umfasst.

12. Luftreifen nach mindestens einem der vorgenannten Ansprüche, weiter einen zu jedem Wulstkern (11) gehörenden herumgeschlagenen Zehen-Gummistreifen (18) umfassend.

13. Luftreifen nach mindestens einem der vorgenannten Ansprüche, weiter einen Kernprofilteil umfassend.

14. Luftreifen nach mindestens einem der vorgenannten Ansprüche, wobei die Wulstkerne (11) eine radiale Querschnittsform aufweisen, die aus der aus einem Fünfeck, einem Sechseck, einem Rechteck und einem Kreis bestehenden Gruppe ausgewählt ist.

## Revendications

1. Bandage pneumatique comprenant une paire de tringles de talons annulaires espacées en direction axiale (11) ; une première nappe de carcasse (14) qui vient s'enrouler autour de chaque tringle de talon (11) et possédant une première paire de portions de nappe de carcasse (14A) de retournement vers le haut essentiellement contigües à la première nappe de carcasse (14) à partir de la tringle de talon (11) jusqu'aux extrémités externes (14B) en direction radiale de la première paire de portions de nappe de carcasse (14) de retournement vers le haut, la première nappe de carcasse (14) comprenant un premier câblé non métallique (110) possédant une structure de 1300 à 2500 deniers/2 comprenant 7-15/7-15 spires par 2,54 cm (tpi) ; et une deuxième nappe de carcasse (12) adjacente en direction radiale à la première nappe de carcasse (14), la deuxième carcasse nappe de carcasse (12) venant s'enrouler autour de chaque tringle de talon (11) et possédant une deuxième paire de portions de nappe de carcasse (12A) de retournement vers le haut essentiellement contigües à la deuxième nappe de carcasse (12) à partir de la tringle de talon (11) jusqu'aux extrémités externes (12B) en direction radiale de la deuxième paire de portions de nappe de carcasse (12B) de retournement vers le haut, **caractérisé en ce que** la deuxième nappe de carcasse (12) comprend un deuxième câblé non métallique (100) possédant une structure de 900 à 1200 deniers/2 comprenant 9-15/9-15 spires par 2,54 cm (tpi).

2. Bandage pneumatique selon la revendication 1, dans lequel le premier câblé non métallique (110) possède une structure de 1400 à 1600 deniers/2 comprenant 8-10/8-10 spires par 2,54 cm (tpi).

3. Bandage pneumatique selon la revendication 1 ou 2, dans lequel le deuxième câblé non métallique (100) possède une structure de 900 à 1100 deniers/2 comprenant 11-13/11-13 spires par 2,54 cm (tpi) .

4. Bandage pneumatique selon la revendication 1, 2 ou 3, dans lequel la deuxième nappe de carcasse (12) est située à l'extérieur de la première nappe de carcasse (14) en direction radiale.

5. Bandage pneumatique selon la revendication 1, 2 ou 3, dans lequel la deuxième nappe de carcasse (12) est située à l'intérieur de la première nappe de carcasse (14) en direction radiale.

6. Bandage pneumatique selon au moins une des revendications précédentes, dans lequel le premier câblé non métallique est un câblé en polyester.

7. Bandage pneumatique selon au moins une des revendications précédentes, dans lequel le deuxième câblé non métallique est un câblé en polyester.

8. Bandage pneumatique selon au moins une des revendications précédentes, dans lequel la première nappe de carcasse (14) comprend de 14 à 35 bouts par 2,54 cm (epi) du premier câblé (110).

9. Bandage pneumatique selon au moins une des revendications précédentes, dans lequel la deuxième nappe de carcasse (12) comprend de 14 à 35 bouts par 2,54 cm (epi) du deuxième câblé (100).

10. Bandage pneumatique selon au moins une des revendications précédentes, dans lequel la première nappe de carcasse (14) comprend de 14 à 20 bouts par 2,54 cm (epi) du premier câblé (110).

11. Bandage pneumatique selon au moins une des revendications précédentes, dans lequel la deuxième nappe de carcasse (12) comprend de 14 à 20 bouts par 2,54 cm (epi) du deuxième câblé (100).

12. Bandage pneumatique selon au moins une des revendications précédentes, comprenant en outre une protection de bout (18) associée à chaque tringle de talon (11).

13. Bandage pneumatique selon au moins une des revendications précédentes, comprenant en outre une portion de bourrage sur tringle.

14. Bandage pneumatique selon au moins une des revendications précédentes, dans lequel les tringles de talon (11) possèdent une configuration en section transversale radiale qui est choisie parmi le groupe constitué par un pentagone, un hexagone, un rectangle et un cercle.
